# EUROPEAN PATENT APPLICATION

(11) **EP 3 203 344 A1**
(43) Date of publication of application: **09.08.2017**
(21) Application number: 16153766.7
(22) Date of filing: 02.02.2016
(51) Int. Cl.: G05D 7/01, F16K 47/16, F24D 19/10

(54) **VALVE, IN PARTICULAR HEAT EXCHANGER VALVE**

(71) Applicant: Danfoss A/S, 6430 Nordborg (DK)
(72) Inventor: Sigurdsson, Haraldur, 8240 Risskov (DK); Hølck, Poul, 8300 Odder (DK)
(74) Representative: Knoblauch, Andreas

(57) **Abstract**

A valve (1), in particular a heat exchanger valve, is described comprising a housing (2b) having a first port 3, a second port 4, and a flow path between said first port (3) and said second port (4), wherein a valve seat (69 having a central axis (9), a main valve element (7), and a dynamic unit (10) are arranged in said flow path, wherein said dynamic unit (10) comprises a dynamic valve element (11) and a counter element (12).

Such a valve should produce only few noise.

To this end at least one of said dynamic valve element (11) and said counter element (12) comprises a corrugation (15, 17) on a surface (14, 16) limiting a part (13) of said flow path.

## Description

The present invention relates to a valve, in particular a heat exchanger valve, comprising a housing having a first port, a second port, and a flow path between said first port and said second port, wherein a valve seat having a central axis, a main valve element, and a dynamic unit are arranged in said flow path, wherein said dynamic unit comprises a dynamic valve element and a counter element.

The present invention is illustrated in the following with help of a radiator valve which is an example for a valve and more specifically an example for a heat exchanger valve. However, the invention is not limited to a heat exchanger valve.

The dynamic unit forms a kind of flow limiter securing an inlet pressure independent maximum flow. The inlet pressure is trying to close the dynamic unit against a spring, and the pressure working between the dynamic unit and the main valve formed by the valve seat and the valve element is trying to open the dynamic unit. "Closing" and "opening" of the dynamic unit means that the throttling resistance of the dynamic unit is increased or decreased.

The dynamic unit forms a throttle with variable flow resistance for the fluid. When the inlet pressure increases, the flow resistance increases as well so that the difference between the inlet pressure and the pressure drop over the dynamic unit is ideally constant.

Each throttle has a risk of producing noise.

The object underlying the invention is to have a valve with a low risk of noise.

This object is solved with a valve as described at the outset in that at least one of said dynamic valve element and said counter element comprises at least a corrugation on a surface of said flow path.

In the dynamic unit a gap is formed between the dynamic valve element and the counter element. The flow through the dynamic unit has to pass this gap. At least on one of the surfaces limiting this gap a corrugation is provided. This corrugation increases the size of the surface. The size of the surface along which the fluid has to flow is one of the factors determining the flow resistance. A large surface can, for example, increase the flow resistance without increasing the size of the dynamic unit. The corrugation can be regular, i.e. a sequence of valleys and crests. However, the corrugation can also be irregular forming a "big" roughness. This means that the corrugation forms an unevenness of the surface increasing the size of the surface along which the fluid has to flow. Such a corrugation or roughness at the same time forces a change of direction of the fluid flow again increasing the flow resistance.

In a preferred embodiment said dynamic valve element comprises a valve element corrugation and said counter element comprises a counter element corrugation. In other words both elements, i.e. the dynamic valve element and the counter element, each comprise a corrugation. The size of the surface limiting the gap which forms part of the flow path, is further increased so that a large area is available in which a friction between the fluid and the dynamic valve element or the counter element, respectively, is produced.

Preferably the dynamic valve element comprises a conical outer surface limiting said part of said flow path, said conical outer surface and said axis including a first cone angle. The conical outer surface can have, for example, an inclination directing the flow of fluid to the center of the valve seat.

Furthermore, it is preferred that said counter element comprises a conical inner surface limiting said part of said flow path, said conical inner surface and said axis including a second cone angle. In particular, when the dynamic valve element and the counter element both comprise conical surfaces, the length of the gap between the dynamic valve element and the counter element can at least slightly be increased to have a relatively large flow resistance.

Preferably said first cone angle differs from said second cone angle. In this case a displacement of the dynamic valve element with respect to the counter element in a direction parallel to the axis leads to a change of the width of the gap in radial direction which is more than only proportional to the displacement.

In a preferred embodiment at least one of said corrugations comprises first peaks running around said axis. In this case the fluid flowing through the gap between the dynamic valve element and the counter element has to change the direction at each peak or crest. The change of direction lowers the velocity of the flow. Physically this means that the flow resistance of the dynamic unit is increased.

In a specific embodiment it is preferred that said peaks are slanted in relation to a circumferential direction around said axis. This has advantages for the presetting of the dynamic unit, i.e. for the adjustment of a flow resistance curve.

Furthermore, it is preferred that at least one of said corrugations comprises second peaks running in a direction of said axis. The peaks or crests have at least a component running in a direction of said axis. It is not necessary that the peaks or crests run exactly parallel to the axis. In this way it is possible to increase the surface of the dynamic valve element and/or the counter element in circumferential direction.

Preferably a position of said valve element relative to said counter element is adjustable. Such an adjustment can be used to change the flow resistance characteristic of the dynamic unit. It is, for example, possible to adjust the maximum flow through the valve.

In a preferred embodiment an initial position of said dynamic valve element relative to said counter element in a direction parallel to said axis is adjustable. The initial position is a position of the dynamic valve element in a pressure free state. With such an adjustment the initial width of the gap between the dynamic valve element and the counter element in radial direction can be defined. The movement of the dynamic valve element starts from this initial position.

In this case it is preferred that said counter element comprises an outer thread and said housing comprises an inner thread, wherein said inner thread is in engagement with said outer thread and said counter element is mounted rotatably in said housing. A rotational movement of the counter element causes a displacement of the counter element parallel to the direction of said axis. The combination of the inner thread and the outer thread forms a gear having a rather high transmission ratio. This means that the rotation of the counter element in the housing by 360° causes a displacement of the counter element by only one or a few millimeters.

In another preferred embodiment an angular relation between said dynamic valve element and said counter element is adjustable. This is in particular useful in a case in which the corrugation has peaks or crests running parallel to said axis and such a corrugation is provided on the dynamic valve element and on the counter element. In this case the width of the gap between the dynamic valve element and the counter element can be adjusted. Furthermore, the adjustment of the angular position is advantageous with the above mentioned slanted corrugations, in particular when such slanted corrugations are present on both of the dynamic valve element and the counter element.

In a preferred embodiment at least one of said corrugations is a wave-like corrugation. This means that the peaks or crests are rounded.

Furthermore, it is preferred that at least one of said corrugations is a stepped corrugation. A stepped corrugation is simple to produce.

Preferred embodiments of the invention will now be described in more detail with reference to the drawing, wherein:
- Fig. 1: is a sectional view through a valve,
- Fig. 2: is an enlarged detail II of Fig. 1,
- Fig. 3: is a sectional view through a second embodiment of a valve,
- Fig. 4: is an enlarged detail IV of Fig. 3,
- Fig. 5: is a view according to Fig. 4 showing a dynamic valve element in side view,
- Fig. 6: is a sectional view of a dynamic unit of a third embodiment, and
- Fig. 7: is a perspective view of the dynamic unit of Fig. 6.

In all figures the same elements are designated with the same reference numerals.

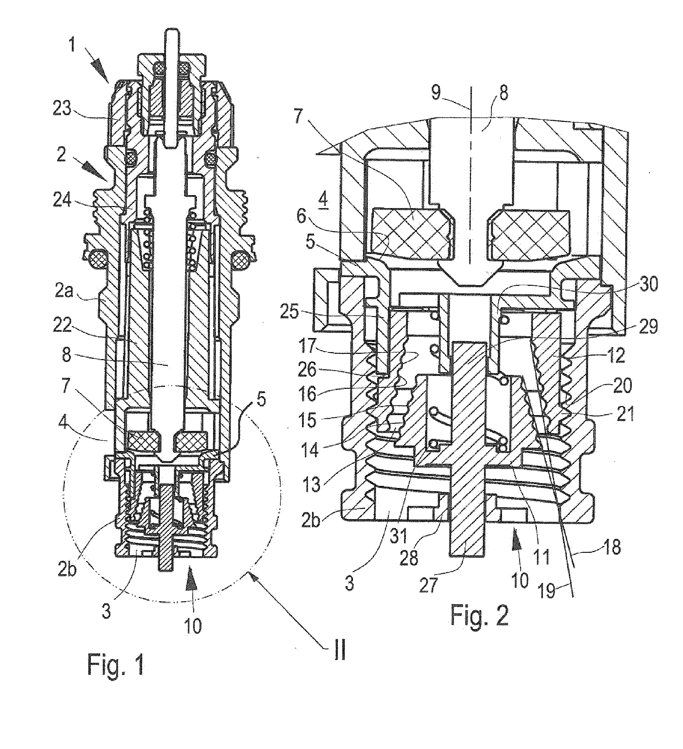

Fig. 1 shows a first embodiment of a valve 1 which is a heat exchanger valve. Valve 1 comprises a housing 2 having an upper part 2a and a lower part 2b. The housing has a first port 3 and a second port 4. First port 3 serves as input and second port 4 serves as output. A flow path is arranged between the first port 3 and the second port 4.

A valve seat member 5 bearing a valve seat 6 is arranged in the flow path. A valve element 7 which is connected to a stem 8 cooperates with the valve seat 6. Valve seat 6 has a central axis 9 which is at the same time a moving axis for the valve element 7.

A dynamic unit 10 is arranged in the flow path upstream said valve seat 6. The dynamic unit 10 comprises a dynamic valve element 11 and a counter element 12. The dynamic valve element 11 and the counter element 12 form a gap 13 which is a part of the flow path between the first port 3 and the second port 4.

The dynamic valve element 11 comprises a conical outer surface 14. The conical outer surface 14 comprises a valve element corrugation 15. The counter element 12 comprises a conical inner surface 16 having a counter element corrugation 17.

Both corrugations 15, 17 are wave-like corrugation running in circumferential direction around axis 9. In other words, both corrugations 15, 17 have crests or peaks running in circumferential direction and describing the form of a circle.

The outer conical surface 15 and the axis 9 include a first cone angle 18. The inner conical surface 16 and the axis 9 include a second cone angle 19. As can be seen in Fig. 2, the first cone angle 18 and the second cone angle 19 are not equal but differ from each other.

The housing 2, more precisely the lower housing part 2b, comprises an inner thread 20. The counter element 12 comprises an outer thread 21 which is in engagement with the inner thread 20. The counter element 12 is rotatably mounted in the housing part 2b. When the counter element 12 is rotated, it is displaced parallel to axis 9, at the same time the form of gap 13 is changed thereby changing the flow resistance curve of the dynamic unit.

Rotation of the counter element 12 can be caused by rotation of valve seat member 21 which in turn can be rotated by means of a valve insert 22 which in turn can be rotated by means of a ring 23 on the top of valve 1, ring 23 being connected to valve insert 22 via a connecting element 24.

Valve seat member comprises a stem 25 protruding into a groove 26 in counter element 12. The cooperation of stem 25 and groove 26 can transmit a rotational movement of valve seat member 5 to the counter element 12, but allows a displacement of counter element 12 parallel to axis 9.

The dynamic valve element 11 comprises a first stem 27 which is guided in a guide 28 which is part of the housing 2 or connected to housing 2. Furthermore, dynamic valve element 11 comprises a second stem 29 which is guided in a second guide 30 which is part of valve seat member 5 or connected to valve seat member 5. The dynamic valve element 11 is guided at both ends or at least at positions which have a large distance in between. Therefore, it is possible to keep an alignment of the dynamic valve element 11 with the axis 9 in a rather high precision.

A spring 31 is arranged between the dynamic valve element 11 and the valve seat member 5.

The dynamic valve element 11 is loaded by a pressure at the first port 3. This pressure generates a force in a direction towards valve seat member 5. When fluid flows through the gap 13 a pressure drop occurs. Therefore, a pressure downstream the dynamic valve element 11 is lower than the pressure at the first port 3. Therefore, the force generated by this pressure difference moves or displaces the dynamic valve element 11 in a direction towards valve seat member 5 increasing the flow resistance through gap 13. When the spring 31 is compressed, it increases the counter force and the dynamic valve element moves into a position in which the force generated by the pressure difference and the force generated by the spring 31 are in an equilibrium.

The two corrugations 15, 17 cause the fluid flowing through the gap 13 to permanently change the direction of flow. This changement of direction lowers the velocity of the flow and has the same effect as a higher flow resistance.

Basically it would be sufficient when only one of the outer surface 14 and the inner surface 16 has a corrugation. However, in a preferred embodiment both surfaces 14, 16 have corrugations 15, 17.

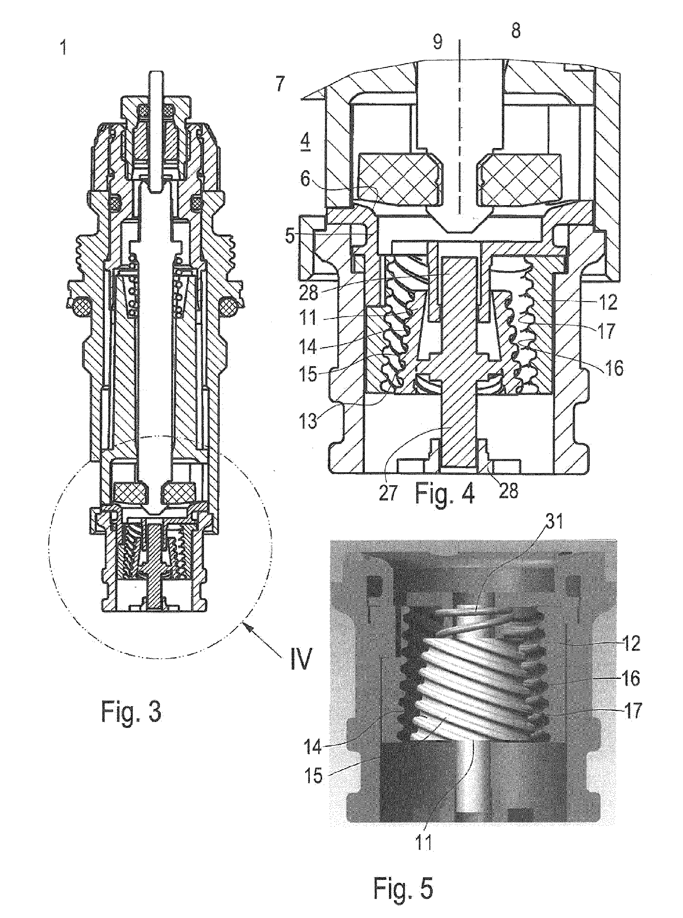

Fig. 3 to 5 show a second embodiment of the valve 1. In this embodiment the valve element corrugation 15 on the outer conical surface 14 of the dynamic valve element 11 are slanted relatively to a pure circumferential direction around axis 9. Furthermore, the counter element corrugation 17 of the inner conical surface 16 of the counter element 12 is slanted with respect to a circumferential direction around axis 9 as well.

Furthermore, although counter element 12 is mounted rotatably in housing part 2b it is not at the same time displaceable parallel to axis 9.

A presetting of the dynamic unit 10 can be achieved by changing the initial distance between the dynamic valve element 11 and the counter element 12. Since both the dynamic valve element 11 and the counter element 12 bear corrugations 15, 17 and both corrugations 15, 17 are slanted with respect to the circumferential direction it is possible to align the peaks of the valve element corrugation 15 and of the counter element corrugation 17 so that these peaks run parallel to each other or to adjust an angle between the peaks of the valve element corrugation 15 and of the counter element corrugation 17. In both cases different flow characteristics can be achieved.

Apart from this difference the basic operation of the valve 1 is the same as in the embodiment shown in Fig. 1 and 2. The spring 31 is shown in Fig. 5 only.

In this case as well both corrugations 15, 17 are of wave-like form.

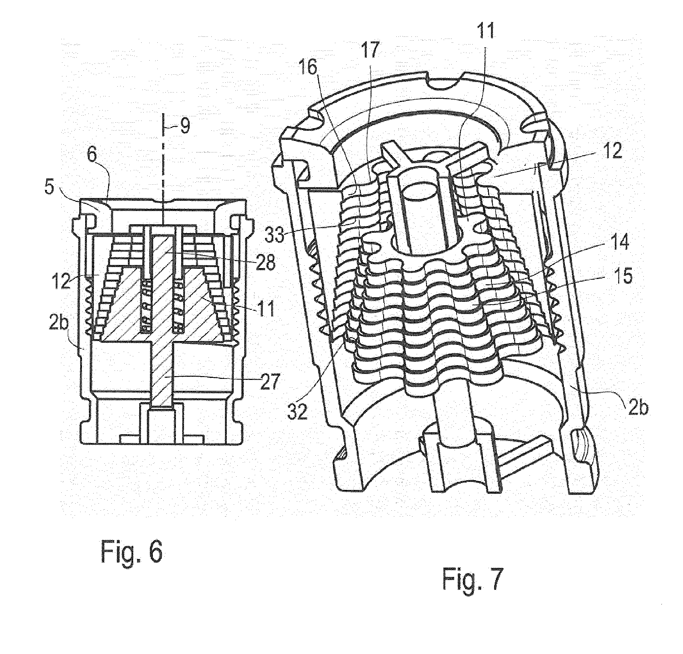

Fig. 6 and 7 show a third embodiment of a dynamic unit 10. Same elements are designated with the same numerals.

It can be seen in particular in Fig. 7 that the dynamic valve element 11 comprises a valve element corrugation 15 in which the peaks or crests run parallel to the valve seat axis 9. The same is true for the counter element corrugation 17 in which the crests or peaks run likewise parallel to the valve seat axis 9.

Furthermore, the conical form of the outer conical surface 14 of dynamic valve element 11 is formed by a number of steps 32. The same is true for a counter element corrugation 17 on the inner conical surface 16 which is formed by a number of steps 33.

The dynamic valve element 11 comprises a combination of two corrugations, one of which runs in circumferential direction and the other one running parallel to valve seat axis 9. The same is true for the counter element corrugation 17 having a first corrugation running in circumferential direction and a second corrugation running parallel to valve seat axis 9.

The dynamic valve element 11 and the counter element 12 are rotationally locked to each other. However, the initial position of the dynamic valve element 11 relative to the counter element 12 in a direction parallel to axis 9 is adjustable.

The double corrugation causes turbulences in the flow and at the same time increase the surfaces of the dynamic valve element 11 and the counter element 12.

## Claims

1. Valve (1), in particular heat exchanger valve, comprising a housing (2) having a first port (3), a second port (4), and a flow path between said first port (3) and said second port (4), wherein a valve seat (6) having a central axis (9), a main valve element (7), and a dynamic unit (10) are arranged in said flow path, wherein said dynamic unit (10) comprises a dynamic valve element (11) and a counter element (12), **characterized in that** at least one of said dynamic valve element (11) and said counter element (12) comprises at least a corrugation (15, 17) on a surface (14, 16) of said flow path.

2. Valve according to claim 1, **characterized in that** said dynamic valve element (11) comprises a valve element corrugation (15) and said counter element (12) comprises a counter element corrugation (17).

3. Valve according to claim 1 or 2, **characterized in that** dynamic valve element comprises a conical outer surface (14) limiting said part (13) of said flow path, said conical outer surface (14) and said axis (9) including a first cone angle (18).

4. Valve according to any of claims 1 to 3, **characterized in that** said counter element (12) comprises a conical inner surface (16) limiting said part (13) of said flow path, said conical inner surface (16) and said axis (9) including a second cone angle (19).

5. Valve according to claim 4, **characterized in that** said first cone angle (18) differs from said second cone angle (19).

6. Valve according to claim 1 to 5, **characterized in that** at least one of said corrugations (15, 17) comprises first peaks running around said axis (9).

7. Valve according to claim 6, **characterized in that** said peaks are slanted in relation to a circumferential direction around said axis (9).

8. Valve according to any of claims 1 to 7, **characterized in that** at least one of said corrugations (15, 17) comprises second peaks running in a direction of said axis (9).

9. Valve according to any of claims 1 to 8, **characterized in that** a position of said dynamic valve element (11) relative to said counter element (12) is adjustable.

10. Valve according to claim 9, **characterized in that** an initial position of said dynamic valve element (11) relative to said counter element (12) in a direction parallel to said axis (9) is adjustable.

11. Valve according to claim 9 or 10, **characterized in that** said counter element (12) comprises an outer thread (21) and said housing (2) comprises an inner thread (20), wherein said inner thread (20) is in engagement with said outer thread (21) and said counter element (12) is mounted rotatably in said housing (2).

12. Valve according to any of claims 9 to 11, **characterized in that** an angular relation between said dynamic valve element (11) and said counter element (12) is adjustable.

13. Valve according to any of claims 1 to 12, **characterized in that** at least one of said corrugations (15, 17) is a wave-like corrugation.

14. Valve according to any of claims 1 to13, **characterized in that** at least one of said corrugations (15, 17) is a stepped corrugation.
